# EUROPEAN PATENT SPECIFICATION

(11) **EP 2 746 038 B1**
(45) Date of publication and mention of the grant of the patent: **14.09.2016**
(21) Application number: 12198022.1
(22) Date of filing: 19.12.2012
(51) Int. Cl.: B29D 99/00, B29C 70/30, B29C 70/54, B64C 1/12

(54) **Method for the production of a structural component, structural component, shell, and aircraft or spacecraft**
Verfahren zur Herstellung einer Strukturkomponente, Strukturkomponente, Schale, und Luft- oder Raumfahrzeug
Procédé de fabrication d'un composant structurel, composant structurel, coque, et aéronef ou engin spatial

(43) Date of publication of application: 25.06.2014
(73) Proprietor: Airbus Operations GmbH, 21129 Hamburg (DE)
(72) Inventor: Roming, Thorsten, 21709 Himmelpforten (DE); Jobs, Thorsten, 22111 Hamburg (DE); Tacke, Stefan, 21647 Moisburg (DE); Reye, Volker, 22609 Hamburg (DE)
(74) Representative: Isarpatent

(56) References cited:
- EP-A2- 2 404 824
- WO-A1-2008/032040
- US-A1- 2010 304 097

## Description

### FIELD OF THE INVENTION

The invention is concerned with a method for the production of a structural component, in particular for the production of a structural component adapted for use as a stiffening component in an aircraft or spacecraft structure. The invention also relates to structural components that preferably may be obtained by performing such a method. Further, the invention relates to a shell adapted for being used as part of a fuselage structure, in particular as part of a fuselage structure of an aircraft or spacecraft, and to an aircraft or spacecraft, in particular an airplane, comprising such a structural component and/or such a shell.

### TECHNICAL BACKGROUND

Although the invention may be useful in various kinds of structures, in particular in such structures which comprise a relatively thin, skin-like element that needs to be reinforced and stiffened by one or more stiffening components, the present invention will be explained in the following with respect to an aircraft fuselage structure, comprising an fuselage skin that has to be reinforced and stiffened by appropriate components.

Traditionally, a fuselage structure of an aircraft comprises a skin which is stiffened by means of stringers, extending along the skin on the inner face thereof, along a longitudinal direction of the fuselage. Further, the skin is stiffened by frames extending along the circumferential direction of the fuselage and being connected to the skin and/or to the stringers.

In a conventional construction, the skin, the stringers and the frames are produced from an appropriate aluminum alloy and are connected to each other by means of rivets. However, it is also known to produce the skin, the stringers and the frames from fiber-reinforced materials, in particular from carbon-fiber-reinforced synthetic materials. According to a conventional manner of producing a fuselage structure from such materials, a frame or a frame segment, made from a fiber-reinforced composite material, is connected to the fuselage skin, which is also made of a fiber-reinforced composite material, by means of connecting elements which are also called "clips". Such a connecting element or "clip" and a method for making it are described in DE 10 2008 020 347 B4. This conventional connecting element is formed as an angled component and is produced from a blank made of a fiber-reinforced thermoplastic synthetic material. In order to sustain forces acting along the longitudinal direction of the aircraft fuselage, in other words, in order to support forces acting in a direction parallel to the stringers, the connecting element of DE 10 2008 020 347 B4 is provided with a stabilizing flange that extends approximately perpendicular to other flanges of the connecting element which are provided for attaching the angled connecting element to the skin and to the frame.

Such a differential concept of producing an aircraft fuselage structure, in which the frames and the connecting elements or "clips" are separate individual components, leads to a production process which is time-consuming and costly. Individual, specially adapted devices are needed for correctly positioning and holding the individual workpieces when these are connected to each other during the manufacturing process.

In addition to this, the production of the conventional connecting elements or "clips" of composite material is also time-consuming and costly, which is undesirable, in particular because of the great number of these connecting elements or "clips" that are required for the production of a complete aircraft.

Further, although the afore-mentioned conventional way of manufacturing an aircraft fuselage structure from fiber-reinforced composite materials may lead to a reduction in the weight of the structure, compared to fuselage structures made of the traditionally used aluminum alloys, it would be desirable to make even better use of the advantageous properties of fiber-reinforced composite materials and to render the fuselage structure even more lightweight.

WO 2008/032040 A1 discloses a method for the production of a structural component according to the preamble of claim 1 and a structural component according to the preamble of claim 5.

### SUMMARY OF THE INVENTION

In view of this technical background, the problem the present invention intends to solve is to provide a structural component, in particular for use as a stiffening component in an aircraft or spacecraft structure, which is resistant and stiff and which is able to sustain the desired loads, which further is lightweight and which reduces the efforts to be made when the structural component is to be integrated into a larger structure.

Further, it is part of the technical problem to be solved to additionally render the production process less costly by reducing the number of tools necessary for the production of the structural component, and to reduce also the number and complexity of tools and holding devices needed when the structural component is integrated into the structure.

Furthermore, the invention aims at providing an improved shell for being used as part of a fuselage structure, an improved aircraft or spacecraft structure, and an improved, efficient method for the production of a structural component.

This technical problem is solved, according to the present invention, by a method for the production of a structural component comprising the features of claim 1, by a structural component comprising the features of claim 5, by a shell comprising the features of claim 12 and/or by an aircraft or spacecraft comprising the features of claim 13.

Accordingly, there is provided a method for the production of a structural component, in particular for the production of a structural component that is adapted for being used as a stiffening component in an aircraft or spacecraft structure.

The method comprises the following method steps:
- A hollow initial profile is formed which comprises a wall that follows a closed path in a cross-section of the initial profile, wherein the wall is formed with a first, a second and a third section provided along the closed path in such a manner that, in the direction of the closed path, the second section is provided between the first and third sections.
- Subsequently, material that initially forms part of the wall in at least one first region of the initial profile is removed so as to obtain at least one first opening in the at least one first region. The at least one first opening is formed so as to extend at least partially within the first section.
- The formation of the at least one first opening is, according to the invention, performed in such a manner that material initially forming part of the wall in the first section of the initial profile, which remains after the formation of the at least one first opening, forms at least one stabilizing section. The at least one stabilizing section is formed in such a manner that it connects the third section and the second section, or that it connects the third section and at least one portion of the second section associated with the at least one stabilizing section.

Furthermore, there is provided a first structural component, in particular adapted for use as a stiffening component in an aircraft or spacecraft structure, which may preferably be obtained by performing the method according to the invention. The structural component is formed with a shape that can be obtained from a hollow initial profile comprising a wall which follows a closed path in a cross-section of the initial profile, wherein the wall is formed with a first, a second and a third section provided along the closed path in such a manner that, in the direction of the closed path, the second section is provided between the first and third sections. The shape with which the structural component is formed is further defined by at least one first opening that is provided in at least one first region of the initial profile, the at least one first opening extending at least partially within the first section. The at least one first opening is formed in such a manner that material forming part of the wall in the first section of the initial profile and outside of the at least one first opening forms at least one stabilizing section. The at least one stabilizing section connects the third section and the second section or the third section and at least one portion of the second section that is associated with the at least one stabilizing section.

Furthermore, there is provided a second structural component, in particular a frame or a frame segment for an aircraft or spacecraft structure, which is preferably obtainable by performing the method according to the invention, and which comprises at least one interface portion, a stiffening section and at least one stabilizing section. The stiffening section is connected to the at least one interface portion. The at least one interface portion is adapted to abut against a further component of the structure in order to join the structural component to the further component, while the stiffening section is adapted to provide stiffness to the structure when the structural component has been joined to the further component. The at least one stabilizing section braces the stiffening section against the at least one interface portion and connects the at least one interface portion and the stiffening section in such a manner that the at least one stabilizing section, the interface portion and the stiffening section in cooperation surround at least a portion of an interior of the structural component, the portion of the interior being accessible from a longitudinal side of the structural component through at least one first opening provided adjacent to the stabilizing section.

The invention provides also a shell which is adapted for being used as part of a fuselage structure, in particular as part of a fuselage structure of an aircraft or spacecraft. According to the invention, the shell comprises a skin element, a plurality of stringers arranged on the skin element and connected to the skin element, and a first or second structural component as proposed by the present invention. The structural component is arranged so as to extend substantially parallel to the skin element and transversely to the stringers.

Moreover, an aircraft or spacecraft, in particular an airplane, is proposed which comprises a first or second structural component and/or a shell according to the present invention.

The idea underlying the present invention is to integrate a stabilizing section, which is suitable for bracing one section - that may form a stiffening section - of a structural component against another portion - such as an interface portion - thereof, into the structural component in such a way that the structural component can be produced in a simple, cost-effective and rapid manner. The integration of the stabilizing section into the structural component avoids the need to separately connect a stabilizing element to the structural component. Consequently, there is no need to manufacture such a stabilizing element separately, the integration of the structural component into a larger structure, such as, for example, a fuselage structure of an aircraft, is significantly simplified, and, in addition, the structural component of the present invention has a lower weight compared to the combination of a conventional structural component and a conventional, separate stabilizing element such as, for example, the stabilizing flange of a conventional "clip".

The production of the structural components according to the invention is significantly simplified due to the shape provided for the structural components, which makes it possible to manufacture each of the structural components from a hollow profile. Such a hollow initial profile can be provided in a simple and efficient manner, for example using methods and processes known as such for the production of hollow profiles from various materials, including, as examples, metal materials, synthetic materials and fiber-reinforced composite materials. However, the present invention is particularly advantageous if the structural components are produced from a fiber-reinforced synthetic material.

After producing the initial profile, the stabilizing sections is formed by removing material, for example by making use of techniques like cutting, machining or the like which can be performed in highly automated manner and by which a rapid and precise removal of material can be achieved. This means that the stabilizing section is shaped in the structural component of the invention, in accordance with the loads that should be supported by the stabilizing section, by simply shaping the at least one first opening accordingly.

When a plurality of structural components according to the invention is manufactured, the shape of the stabilizing section may also be changed from one structural component to the next, without requiring the use of new, specially adapted tools, molds or the like. Instead, it is only necessary to appropriately shape the at least one first opening. Initial profiles of the same shape may be used for producing different structural components. When the material is removed in automated manner, this in many cases only requires a modification of the program controlling the equipment used for removing the material.

The term "opening" as it is used in the context of this application is intended to encompass not only openings and apertures that are surrounded, along a circumference thereof, by the material of the workpiece in which the "opening" has been formed, but is intended to include also openings that extend from an edge of the workpiece into the workpiece. This means that, in particular, an opening in the sense of this term may also, for example, extend in recess-like manner from an edge of the wall at an end of the initial profile into the wall.

Advantageous improvements and developments of the invention are contained in the dependent claims as well as in the detailed description, which refers to the figures of the drawings.

In a development of the method and of the first structural component, the second section or the portions of the second section may be formed as an interface portion or as interface portions adapted to abut against a further component of the structure, suitable for attaching the structural component to the further component. According to an example, the further component may be a fuselage skin. Moreover, according to this development, the third section may be adapted to fulfill the function of a stiffening section providing stiffness to the structure when the structural component has been joined to the further component. In particular, the stiffening section may provide a great part of the bending strength of the structural component. Within a structural component according to this development, the stabilizing section can be used to brace the stiffening section against the interface portion(s) in order to efficiently transmit forces acting on the stiffening section into the further component. A structural component according to this development can be joined to the further component without the use of separate connecting elements like the conventional "clips". Thereby, the assembly effort and the number of individual components to be assembled are reduced even further.

According to an improvement of the method and of the first structural component, the second section or the at least one associated portion thereof is formed with an abutment surface for joining the structural component to further components, in particular to a skin and/or to one or more stringer feet of an aircraft or spacecraft structure. According to a preferred development of the method and of the first structural component, material initially forming part of the wall in a plurality of first regions of the initial profile is removed so as to obtain a plurality of first openings which are spaced from each other. The plurality of openings each extend at least partially within the first section. According to this development, the formation of the first openings is performed in such a manner that material initially forming part of the wall in the first section of the initial profile and remaining after the formation of the plurality of first openings forms a plurality of stabilizing sections which each connect the third section and the second section, or which each connect the third section and at least one portion of the second section associated with the respective stabilizing section. In this way, a plurality of stabilizing sections are provided which may support loads in different locations along the structural component.

According to a preferred development of the method and of the first structural component, the initial profile is formed in such a manner that, in the cross-section of the initial profile, an outer surface of the wall forms a circumferential surface of the initial profile. In particular, in this cross-section, the entire outer surface of the wall forms the circumferential surface of the initial profile. This may be advantageous with respect to the production of the initial profile. A hollow initial profile of this kind can be produced even more simply, as it does not comprise, in its cross-section, additional flanges or the like which extend outwardly from the wall that follows the closed path.

In accordance with the invention, the initial profile is formed as a hollow profile comprising at least two cells adjacent to each other in the cross-section of the initial profile. The cells are formed by providing an additional transverse wall which connects the first section and the third section. Such a two-cell or multi-cell initial profile has the advantage that the additional transverse wall can be used for stabilizing the structural component even further. The additional transverse wall can be used to increase the resistance of the structural component as a whole, and in particular of the third section of the wall, against buckling.

In the invention, the at least one first opening or each of the first openings is/are formed in such a manner that the at least one first opening or each of the first openings partially extends into the additional transverse wall of the initial profile. This means that when the first opening or the first openings is/are formed, material initially forming part of the additional transverse wall of the initial profile is removed. Thereby, the transverse wall can be shaped, in the same step of processing the initial profile in which the at least one first opening or the first openings is/are formed, as necessary for the transverse wall in order to perform a function of preventing buckling, in particular buckling of the third section of the wall. This has the advantage that it is not necessary to shape the transverse wall in a separate step. A further advantage is that the transverse wall, during the formation of the first opening(s), can be shaped so as to be able to perform its anti-buckling function, while the total weight of the structural component is optimized by removing portions of the transverse wall that are not needed.

In the invention, the at least one first opening or the first openings is/are formed in such a manner that material initially forming part of the transverse wall and remaining after the formation of the at least one first opening or the first openings connects the stabilizing section with the third section. In this manner, the stabilizing section itself is stabilized by means of the remainder of this transverse wall, and, for example, buckling of the stabilizing section is prevented.

According to a further development of the method and of the first structural component, material initially forming part of the wall in at least one second region of the initial profile is removed so as to obtain at least one second opening in the at least one second region. The at least one second opening partially extends within the first section and extends from the first section through the second section into the third section in such a manner that the at least one second opening forms at least one transverse passage through the structural component. In particular, the second section is thereby divided into at least two portions each associated with one stabilizing section or with more than one of the stabilizing sections. A structural component according to this development can be easily placed transversely to a further stiffening component onto a skin-shaped component, for example, transversely to stringers arranged on a fuselage skin, as the additional stiffening element or stringer may pass through the transverse passage.

Preferably, the at least one second opening is dimensioned and shaped so as to allow the additional stiffening component to pass through.

In a further improvement of the method and of the first structural component, material initially forming part of the wall in a plurality of second regions of the initial profile is removed so as to obtain a plurality of second openings which are spaced from each other. Each of the second openings partially extends within the first section and extends from the first section through the second section into the third section in such a manner that each of the second openings forms a transverse passage through the structural component. In particular, the second section is thereby divided into a plurality of portions each associated with one stabilizing section or with more than one of the stabilizing sections. A structural component according to this improvement may easily be placed transversely to a plurality of further stiffening components, for example, to a plurality of stringers extending in parallel with each other on a fuselage skin.

In accordance with a further improvement of the method and of the first structural component, the at least one stabilizing section or each of the stabilizing sections is formed with a Y-shape comprising a stem and two legs connected to the stem. The transverse passage or one of the transverse passages is, according to this improvement, arranged between the legs. A stabilizing section according to this development makes it possible to evenly introduce forces into the portions of the second section associated with each of the legs, on both sides of the at least one second opening or of each of the second openings. Further, shaping the stabilizing section in this manner may in a variant enable introducing forces directly from the stabilizing section into an additional stiffening component running through the transverse passage, for example a stringer.

According to a further development of the method and of the first structural component, the stem of the stabilizing section is connected to the third section, and each of the legs of the stabilizing section is connected to one of the portions of the second section associated with the stabilizing section having the stem and the legs.

According to another improvement of the method and of the first structural component, the at least one first opening is formed so as to extend from the first section through the second section into the third section, whereby the first opening forms a transverse passage through the structural component. In case a plurality of first openings are provided, each of the first openings may extend from the first section through the second section into the third section, whereby a plurality of transverse passages through the structural component are formed. In this way, passages for additional stiffening components, for example stringers, as described above, are formed directly by the first openings, while second openings do not have to be provided. However, first openings according to this variant may also be combined with second openings in order to provide even more of such passages.

According to a further preferred development of the method and of the first structural component, the extent of the first opening or each of the first openings, measured in a direction transverse to the direction of the length of the initial profile, is greater in the first section than in the third section. While the dimension of the portion of the first opening within the third section may thus, according to this development, be dimensioned so as to be adapted in size to the size of an additional stiffening component extending transversely to the structural component, the portion of the first opening located within the first section is dimensioned to extend further into the first section. This has the advantage that while the bending resistance and stiffness of the third section of the wall is not compromised, weight can be saved by enlarging the portion of the first opening extending within the first section.

In a further development of the method and of the first structural component, the third section is formed so as to comprise a first sub-section and a second sub-section. The first sub-section is adjacent to the second section and forms a web of the structural component, while the second sub-section is adjacent to the first section and forms a first flange of the structural component. The bending resistance of the structural component is thereby improved even further.

According to a preferred improvement of the method and of the first structural component, the closed path has substantially the shape of a polygon, in particular of a triangle or of a trapezoid, wherein the first, second and third sections of the wall form consecutive sides of the polygon in the cross-section of the initial profile. Choosing such a closed path in the cross-section of the initial profile makes it possible to obtain a structural component which is particularly suitable for stiffening a skin-shaped component, for example, as the second section may be placed against the skin-shaped component while the third section projects away from the skin-shaped component at an angle in order to stiffen the skin-shaped component. In a preferred example, in the cross-section of the profile, the second and third sections of the wall may enclose approximately a right angle, whereby the structural component becomes particularly suitable for stiffening a skin-shaped component.

According to one preferred development of the method and of the first structural component, the initial profile is formed with a cross-section that is substantially constant along the length of the initial profile, and the wall is formed continuous in the direction of the length of the initial profile. Such an initial profile is particularly simple to produce.

In a further improvement of the method and of the first structural component, the corners of the polygon are rounded. In this way, internal stresses within the structural component may be reduced. Additionally, if the closed path is formed as a polygon with rounded corners, the hollow initial profile may be even more suitable for being produced from a fiber-reinforced composite material.

According to one further preferred improvement of the method and of the first structural component, the initial profile is formed so as to be curved in the direction of the length of the initial profile. Preferably, when the third section of the wall of the initial profile comprises a first sub-section and a second sub-section, the initial profile is formed so as to be curved in such a manner that the second sub-section forms an inner flange of the structural component, and that the second section forms an outer flange or portions of an outer flange of the structural component. Such a structural component is particularly suitable for being used for stiffening a skin-shaped component which is curved.

According to another development of the method and of the first structural component, the at least one first opening or each of the first openings extends entirely within the first section. This can be useful in case at least one second section or a plurality of second sections are provided which form(s) the transverse passage(s) through the structural component, or in case it is not desired to provide such transverse passages.

Alternatively, the at least one first opening or each of the first openings extends entirely within the first section of the wall and within the additional transverse wall, whereby additionally, the advantages described above of removing material initially forming part of the additional transverse wall are obtained.

Further alternatively, the at least one first opening or each of the plurality of first openings may extend entirely within the first and second sections, or may extend entirely within the first and second sections and within the additional transverse wall. This may be useful if at least one second section or a plurality of second sections is/are provided which form(s) (a) transverse passage(s) through the structural component, and if additionally, it is required for the second section to be, at least partially, rather wide for secure attachment of the second section to a further component, for example to a skin-shaped component. Extending the first opening into the second section may help to reduce weight in this case.

According to a development of the method and of the first structural component, the at least one stabilizing section is provided with a rounded shape, in particular in those region of the stabilizing section where the stabilizing section merges into the second section or into the associated portion of the second section and into the first section, respectively. In this way, internal stresses in these regions of the stabilizing section, when the stabilizing section is loaded, are reduced.

Preferably, in case a plurality of first and a plurality of second openings are provided, the first and second openings are arranged in alternating manner along the direction of the length of the initial profile.

According to a further, particularly preferred improvement of the method and of the first structural component, the wall of the hollow initial profile is formed in one piece, whereby the at least one stabilizing section of the structural component is formed as a stabilizing element that is integral with the third section and that is integral with the second section or the at least one associated portion thereof. In this manner, a structural component is obtained which is particularly lightweight and resistant.

The initial profile may, according to a development of the method and of the first structural component, be formed from a metal material, for example, from aluminum or an aluminum alloy. Thereby, a lightweight and resistant structural component made from the metal material may be obtained. For example, the metal material may be extruded in order to form an extruded initial profile.

According to a preferred development of the method and of the first structural component, the hollow initial profile is produced from a fiber-reinforced synthetic material comprising fibers embedded in a matrix. The structural component of the present invention is particularly suitable for being produced from a fibre-reinforced synthetic material, as it is comparatively simple to form a hollow initial profile of such a material. After having formed the initial profile, the much more complex final shape including the stabilizing section and the first opening or the stabilizing sections and the first openings is obtained by removing material. Complicated molds or the like are not necessary, and as the stabilizing section is integral with the second and third sections, the structural component obtained is lightweight. It is preferred, in this case, that the removal of material initially forming part of the wall is performed in such a manner that within at least a portion of the at least one stabilizing section, fibres are arranged which extend continuously from the third section through the stabilizing section into the second section or into the portion of the second section associated with the stabilizing section.

According to a further development of the method and of the first structural component, the fibre-reinforced synthetic material comprises a matrix formed with an epoxy resin, into which carbon fibres are embedded. In other variants, the fibres used may be glass fibres or aramid fibres. In a further variant, the matrix may also be formed with a phenolic resin. However, it is preferred to use a carbon fibre-reinforced epoxy resin for forming the initial profile.

According to a preferred development of the method and of the first structural component, the initial profile is formed by placing a fiber prepreg or several fiber prepregs in the form of a layer of reinforcing fibres, a non-crimp fabric of reinforcing fibres and/or a woven fabric of reinforcing fibres, preimpregnated with an uncured or only partially cured matrix material, onto a core, and subsequently curing the matrix material. In a variant, the prepregs may be placed onto several individual cores which are then arranged to form a assembly, wherein in particular one or more additional prepreg layers may subsequently be wrapped around the assembly. Then, the assembly of layers and cores is subjected to a process of curing the matrix material. Using prepreg layers makes it possible to produce a high-quality composite initial profile.

In another variant of the method and of the first structural component, the initial profile may be formed by winding and/or braiding preimpregnated reinforcing fibres or preimpregnated reinforcing fibre bundles onto one or more such cores. After arranging the cores to form an assembly, reinforcing fibres or fibres bundles may be wound and/or braided around the assembly as a whole. Afterwards, the matrix material is cured.

According to a further alternative, instead of prepreg layers, dry layers of unidirectional fibres or of dry woven fabric of fibres or of dry non-crimp fabric of fibres or a combination thereof may be placed onto one or more cores and, in particular, around an assembly of cores, as described before. Instead of using dry fibre layers, dry fibre bundles may be wound and/or braided onto the core or cores and, in particular, around the assembly. In both cases, the dry fibres can subsequently be infiltrated with resin which is cured afterwards.

According to a further development of the method and of the first structural component, the at least one first opening and/or the at least one second opening is/are formed as an aperture or apertures enabling access to an interior of the initial profile from an outside thereof or to a portion of the interior. According to this development, the aperture(s) is/are formed by machining of the wall, in particular by milling, or by cutting the wall, in particular by means of a laser beam or a water jet. Preferably, the at least one first opening or the first openings is/are formed so as to enable access to an inner face of the second section of the wall or of the portions of the second section. Access to the interior of the initial profile or to a portion thereof, and in particular to the inner face of the second section, is advantageous with regard to attaching the structural component to a further component, for example to a skin-shaped component, e.g. by means of rivets. Machining or cutting the wall makes it possible to obtain the opening in rapid and precise manner.

According to a preferred improvement of the second structural component, the structural component is formed with a shape that can be obtained from a hollow initial profile comprising a wall which follows a closed path in a cross-section of the initial profile. The wall is formed with a first, a second and a third section provided along the closed path in such a manner that, in the direction of the closed path, the second section is provided between the first and third sections. According to this improvement, the second section or a portion thereof forms the at least one interface portion, while the third section or a portion thereof forms the stiffening section. The at least one first opening is provided in at least one first region of the initial profile, extends at least partially within the first section and is formed in such a manner that material forming part of the wall in the first section of the initial profile and outside of the at least one first opening forms the at least one stabilizing section.

To the second structural component, in particular to the second structural component according to the preceding improvement, the developments and improvements described above with respect to the method and with respect to the first structural component may be applied as well.

Moreover, according to another preferred development of the second structural component, the at least one interface portion, the stiffening section and the at least one stabilizing section are formed in one piece with each other. In this way, a structural component that is lightweight, stiff and resistant and can be manufactured in advantageous manner is obtained.

In particular, in the second structural component, the at least one interface portion, the stiffening section and the at least one stabilizing section may advantageously be formed from a fibre-reinforced synthetic material comprising fibres embedded in a matrix. Preferably, within at least a portion of the at least one stabilizing section fibres are arranged which extend continuously from the stiffening section through the stabilizing section into the at least one interface portion. Thereby, the load-bearing capacity and the weight of the structural component can be improved still further.

According to an alternative variant of the second structural component, the at least one interface portion, the stiffening section and the at least one stabilizing section may be formed of a metal material such as aluminum or an aluminum alloy.

According to a preferred development of the method and of the first and second structural components, the structural component is formed as a frame or as a frame segment for an aircraft or spacecraft structure, in particular for a fuselage structure of an aircraft or spacecraft. For example, the structural component may be formed as a frame segment for an upper shell of an aircraft fuselage, or as a frame segment for a side shell of an aircraft fuselage.

Preferably, the first and second structural components are produced using the method proposed by the present invention.

The developments, improvements and enhancements described above may be combined with each other. Moreover, other possible developments, enhancements and implementations of the invention comprise combinations of features of the invention which have been described above or will be described in the following in relation to the detailed description of embodiment.

### BRIEF DESCRIPTION OF THE DRAWINGS

The present invention will be explained in the following with reference to the schematic figures of the drawings, which illustrate embodiments of the invention.
- Figure 1: is a perspective partial view of a structural component according to a first embodiment of the present invention;
- Figure 2: is a perspective view of the entire structural component according to the first embodiment of the present invention;
- Figure 3: is a front view of the structural component of Figure 2 in direction A;
- Figure 4: shows a detail B of Figure 3;
- Figure 5: shows a cross-sectional view C-C of the structural component, as indicated in Figure 3, and also illustrates a cross-section of an initial profile from which the structural component of Figs. 1-4 has been produced;
- Figure 6: is a perspective partial view of a structural component according to a second embodiment of the present invention;
- Figure 7: is a perspective view of the entire structural component according to the second embodiment of the present invention;
- Figure 8: is a front view of the structural component of Figure 7 in direction D;
- Figure 9: shows a detail E, indicated in Figure 8; and
- Figure 10: schematically shows an example of a process for forming a hollow initial profile as a semi-finished part for the production of the structural components.

The enclosed drawings are intended to illustrate embodiments of the invention so that the invention may be further understood. The drawings, in conjunction with the description, are intended to explain principles and concepts of the invention. Other embodiments and many of the advantages described may be inferred from the drawings. Elements of the drawings are not necessarily drawn to scale.

Elements, features and components which are identical or which have the same function or effect have been labeled in the drawings using the same reference signs, except where explicitly stated otherwise.

### DETAILED DESCRIPTION OF EMBODIMENTS

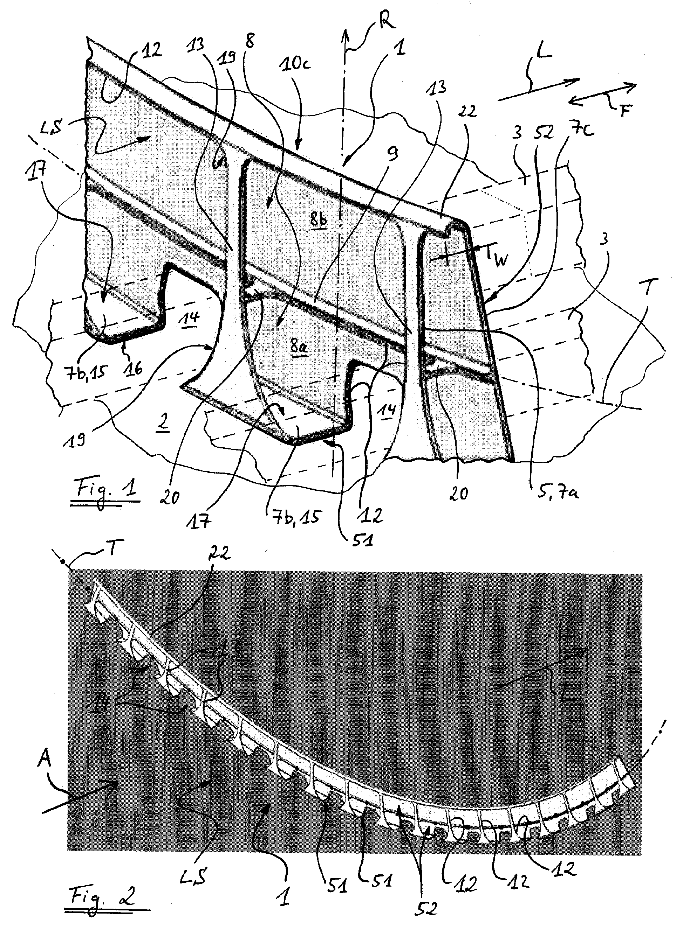

A structural component 1 according to a first embodiment of the present invention is illustrated in Figures 1-5. The structural component 1 is formed as a segment of a ring frame for an aircraft fuselage structure, which is not shown in its entirety in the figures. The structural component 1 has the function of stiffening an aircraft fuselage skin 2, schematically indicated in Figure 1. Figure 1 also shows additional stiffening components 3, which are formed as stringers extending in parallel with each other along an inner face of the fuselage skin 2, the stringers having an Ω-shaped cross-section, for example.

According to the first embodiment, the structural component 1, the fuselage skin 2 and the additional stiffening components 3 are each produced from a fiber-reinforced synthetic material.

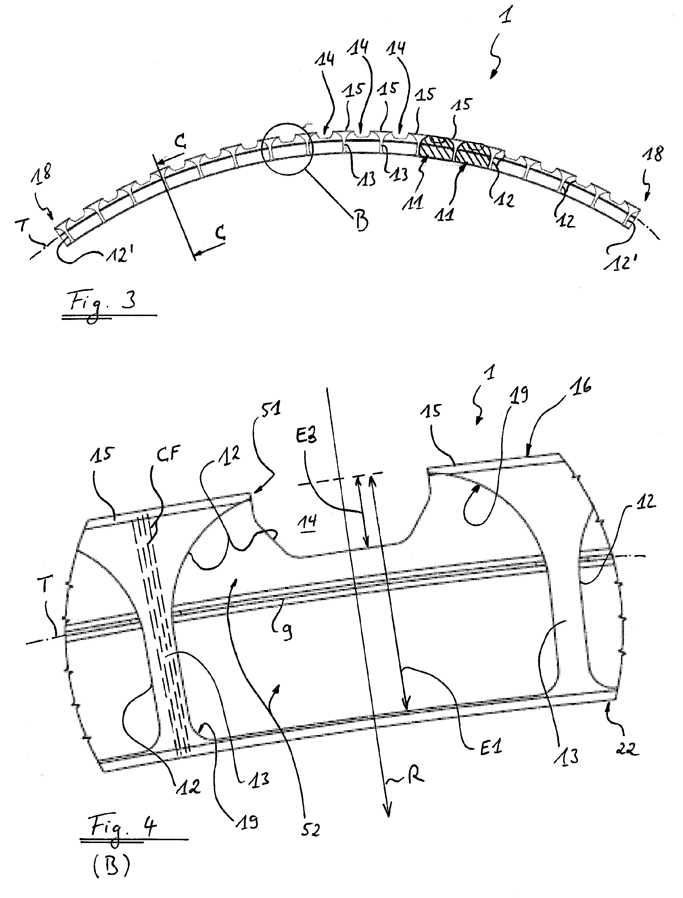

The structural component 1, shown in its entirety in Figures 2 and 3, is preferably used in cooperation with further structural components 1 of the same type for stiffening a skin element for an aircraft fuselage, so as to form, in cooperation with a plurality of stringers (not shown in Figures 2 and 3), a shell, for example a composite upper shell, of the aircraft fuselage. In order to form such a shell, the structural component 1 can be placed transversely to the stringers onto the skin element and be connected to the skin element directly or via stringer feet extending from the stringers.

As shown in Figure 2, the structural component 1 follows a trajectory T, which will also be referred to as the direction of the length of the structural component 1 and as the direction of the length of an initial profile 4 from which the structural component 1 is produced, as will be described in more detail below. The trajectory T of the structural component 1 of the embodiment of Figure 2 is curved, in such a manner that the structural component 1 is adapted to serve as a frame or frame segment for stiffening the curved skin of the aircraft fuselage.

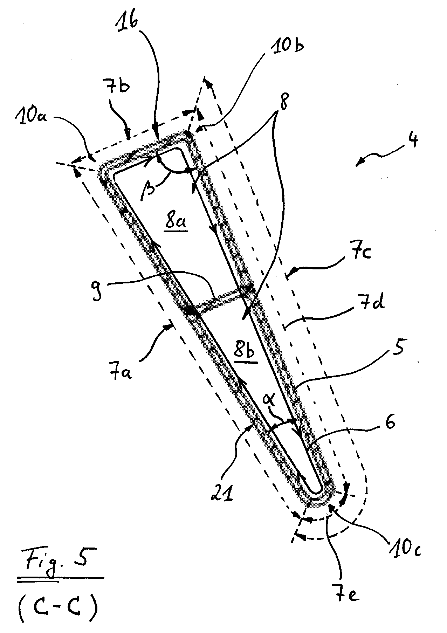

In order to produce the structural component 1 of the first embodiment, in a first step, a hollow initial profile 4 is formed, preferably so as to follow the trajectory T required for the structural component 1. The cross-section of the hollow initial profile 4 corresponds to the cross-section C-C shown in Figure 5. The cross-sectional shape of the initial profile 4 will now be explained in more detail.

The initial profile 4 comprises a wall 5 which follows, in the cross-section shown in Figure 5, a closed path 6. The wall 5 is formed with a first section 7a, a second section 7b and a third section 7c, which are provided along the closed path 6. As shown, along the closed path 6, the second section 7b is provided between the first section 7a and the third section 7c. The wall sections 7a, 7b and 7c surround, in cooperation, an interior 8 of the hollow initial profile 4.

As also shown in Figure 5, the initial profile 4 comprises two cells 8a and 8b which, in cooperation, form the interior 8 of the initial profile 4. The two cells 8a, 8b are arranged adjacent to each other in the cross-section of Figure 5, and are formed by an additional transverse wall 9 which connects the first section 7a and the third section 7c of the wall 5.

As shown, the closed path 6 is substantially shaped in the form of a triangle with rounded corners, whereby the initial profile 4 is provided with rounded edges 10a, 10b, 10c. In the region of the edge 10c, the third section 7c merges into the first section 7a. When measured along the third section 7c of the wall 5, the additional transverse wall 9 may, as an example, be positioned at approximately half the distance between the edge 10c and the edge 10b, so as to be joined to the third section 7c at approximately half the distance from the edge 10c to the edge 10b in the cross-section shown in Figure 5. However, the position of the additional transverse wall 9 may be chosen differently. For example, the additional transverse wall 9 may be placed closer to the second section 7b than to the edge 10c, as illustrated in Figure 5. The transverse wall 9 may be integrally joined to the third section, for example, at a position, measured from the edge 10c, ranging from about 30 percent of the distance between the edge 10c and the edge 10b to about 70 percent of this distance, but these numbers should only be understood as examples and may be chosen differently. The additional transverse wall 9 may advantageously extend substantially parallel to the second section 7b of the wall 5, as in the first embodiment shown in Figure 5.

As displayed in Figure 5, the first section 7a, the second section 7b and the third section 7c of the wall 5 form consecutive sides of the triangle-shape in this cross-section. In this embodiment, the sections 7a-7c are formed in one piece with each other and with the additional transverse wall 9.

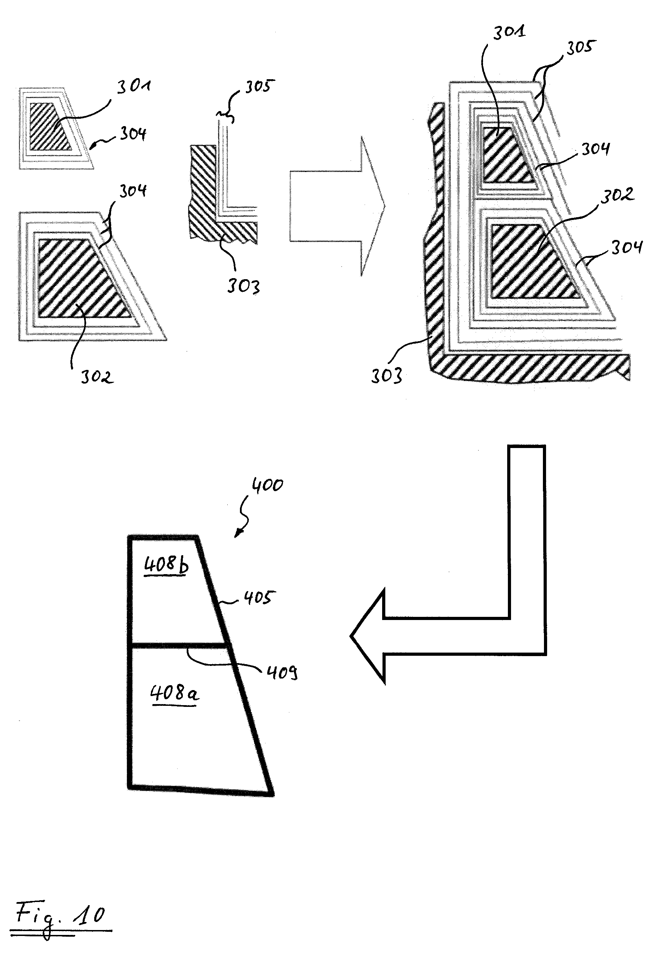

As explained, in the first step of producing the structural component 1 according to the first embodiment, the initial profile 4 is formed. The initial profile 4 may be formed from a metal material, such as aluminum or an aluminum alloy. As an example, the initial profile 4 could be an extruded profile of such a metal material. Preferably, however, the initial profile 4 is produced from a fiber-reinforced synthetic material, in particular from a carbon fiber-reinforced epoxy resin. The production of the initial profile 4 from fiber-reinforced synthetic material will be explained more fully below with reference to Figure 10.

At this point, it is to be noted that the hollow initial profile 4 in the first step is formed with a cross-section that is constant along the trajectory T, indicated in Figure 2, and that the walls 5 and 9 are continuous along the trajectory T, which means that the walls 5 and 9 are continuous along the direction of the length of the initial profile 4. In other words, along the trajectory T, the cross-section of the initial profile 4, taken perpendicularly to the trajectory T, corresponds to the cross-section depicted in Figure 5 preferably along the entire length of the initial profile 4. Furthermore, already the initial profile 4 is formed so as to follow a trajectory T which is curved, the curvature being adapted to the curvature of the fuselage skin to be stiffened.

In a second step, material which initially forms part of the wall 5 in a plurality of regions 11 of the initial profile 4 is removed, preferably by milling or by cutting by means of a water jet or a laser beam. Thereby, a plurality of first openings 12 are obtained which are spaced from each other along the trajectory T, as shown in Figures 2 and 3. Each of the openings 12 extends partially within the first section 7a, from approximately the location where, in the region of the edge 10c, the third section 7c merges into the first section 7a, through the first section 7a into the second section 7b and into the third section 7c (see Figure 1). However, the extent of the first openings 12, measured in a direction R transverse to the direction of the length of the initial profile (or the trajectory T) is greater in the first section 7a than in the third section 7c, see Figures 1 and 4. In Figure 4, the greatest extent of the first opening 12 in the first section 7a is denoted by E1, while the greatest extent of the opening 12 within the third section 7c is denoted by reference sign E3.

As shown in Figures 1-4, the first openings 12 are formed as apertures which enable access, from a longitudinal side LS of the structural component 1, to the interior 8 of the former initial profile 4, which has become an interior 8, partially divided by a remainder of the transverse wall 9 into the two cells 8a and 8b, of the structural component 1. The interior 8 forms a longitudinal passage along the trajectory T through the structural component 1, as Figure 2 shows.

As shown in Figure 1, the formation of the first openings 12 is performed in such a manner that material which initially forms part of the wall 5 in the first section 7a of the initial profile 4 and which, as it is located outside the first openings 12 to be formed and therefore remains after the formation of the first openings 12, forms a plurality of stabilizing sections 13. Two of the first regions 11 are, for the purpose of explanation, indicated by hatching in Figure 3.

The first openings 12, each extending from the first section 7a through the second section 7b into the third section 7c, each form a passage 14, extending transversely through the structural component 1, and adapted in such a manner that one of the additional stiffening components 3, in particular a stringer, may pass through the transverse passage 14 when the structural component 1 is placed against the skin 2. As shown, the first openings 12, as they extend through the second section 7b, divide the second section 7b into a plurality of portions 15, each of which is formed with an abutment surface 16 which is adapted for joining the structural component 1 to the skin 2, either directly or via one or more stringer feet (not shown) of additional stiffening components 3 formed as stringers. The portions 15 of the second section 7b thus form interface portions 51 of the structural component 1, adapted to abut against the skin 2 and/or the stringer feet.

The first openings 12 enable access to an inner face 17 of the second section 7b of the wall 5 within the portions 15 which remain, thereby facilitating an attachment of the structural component 1 to the fuselage skin 2. The attachment may be accomplished by means of rivets, for example, but the structural component 1 could also be adhesively bonded to the skin 2.

As illustrated in Figure 1, each of the stabilizing sections 13 connects the third section 7c and the portions 15 of the second section 7b of the wall 5 to each other. The continuous portion of the third section 7c remaining in the finished structural component 1 after the formation of the first openings 12 forms a web-like stiffening section 52 which is connected to the interface portions 51 and provides stiffness to the fuselage skin 2 when the structural component 1 has been joined to the skin 2, thereby stiffening the fuselage structure in cooperation with the additional stiffening components or stringers 3.

In this manner, each stabilizing section 13 contributes to transmitting forces F acting on the structural component 1 along a longitudinal direction L of the fuselage to the portions 15 of the second section 7b and into the fuselage skin 2. The stabilizing sections 13 thus brace the stiffening section 52 against the interface portions 51.

These stabilizing sections 13 thus form stabilizing elements which are integral with the entire structural component 1, by being integral with the third sections 7c and an associated portion 15 of the second section 7b. Thereby, the stabilizing elements are integral with the stiffening portion 52 and the respective interface portion 51.

Referring to Figure 5 again, the second section 7b and the third section 7c enclose an angle β, while the first section 7a and the third section 7c enclose an angle α. As illustrated, the angle β substantially corresponds to a right angle. This choice is advantageous as it is suitable for a situation in which the third section 7c forms the stiffening section 52 while portions of the second section 7b form the interface portions 51 intended to abut on the fuselage skin 2 of an aircraft fuselage. For stiffening other kinds of structures, a different angle β can be chosen as required.

As also shown in Figure 5, the angle α corresponds to an acute angle. The angle α may be chosen, as an example, between 10 and 20 degrees, but other values may be chosen if desired. In particular, by selecting the angle α, the width of the second section 7b of the wall 5 may be varied. For example, if it is desired to attach the structural component 1 via the interface portions 51 by means of one row of rivets, the angle α may be chosen at a first value. In case, however, it is desired to provide two or more rows of rivets, the rows being arranged parallel to the trajectory T and parallel to each other within each interface portion 51, the angle α may be chosen to assume a second value greater than the first value.

As may be seen from Figure 3, in particular, the first openings 12 are formed with a substantially identical shape and are arranged with substantially constant spacing along the direction of the length of the initial profile 4. Only at the ends 18 of the structural component 1, there may be provided a modified first opening 12' representing only a part of one of the other first openings 12.

As further shown in Figures 1-4, the stabilizing sections 13 are shaped wider towards the portions 15 of the second section 7b than towards the edge 10c where the stabilizing sections 13 merge into the third section 7c.

Where the stabilizing sections 13 merge into the third section 7c and into the portions 15 of the second section 7b, respectively, the first openings 12 are formed with rounded regions 19, which contribute to reducing internal stresses within the structural component 1 under the action of forces F, for example. In the rounded regions 19, each first opening 12 may have a boundary shaped like an arc of a circle, or shaped according to some other smooth and continuous curve.

As may be observed from Figure 1, in particular, the first openings 12 are formed in such a manner that the first openings 12 partially extend into the additional transverse wall 9 of the initial profile 4. By removing also a part of the material initially forming the additional transverse wall 9 when forming the first openings 12, access from an outside of the structural component 1 to the inner faces 17 of the portions 15 for attachment of the structural component 1 is further facilitated, and the weight of the structural component 1 is further reduced. However, in order to optimize the buckling resistance of the third section 7c of the wall 5, a part of the width of the additional transverse wall 9 remains, preferably along the entire trajectory T of the structural component 1, as shown in Figures 1-3. In the regions of the stabilizing sections 13, a remainder 20 of the additional transverse wall 9 connects the stabilizing section 13 to the third section 7c, whereby deformation and buckling of the stabilizing section 13, for example, can be avoided in a loaded condition of the structural component 1 as well.

Referring again to Figure 5, it may be observed that an entire outer surface 21 of the wall 5 forms a circumferential surface of the initial profile 4. Moreover, the third section 7c of the wall 5 is formed so as to comprise a first sub-section 7d and a second sub-section 7e. The first sub-section 7d is adjacent to the second section 7b and the second sub-section 7e is adjacent to the first section 7a. In the finished structural component 1, as shown in Figures 1-4, the second sub-section 7e forms an inner flange 22 of the structural component 1 along the entire length of the latter. Although in the embodiment illustrated in Figures 1-5, the inner flange 22 has a rather small width W, the width W of the inner flange 22 could also be increased, in which case the closed path 6, see Figure 5, would assume a more trapezoidal shape. As additionally shown in Figure 1, the portions 15 form remainders of an external flange of the structural component 1, while the additional transverse wall 9 represents an intermediate flange useful for increasing the buckling resistance of the stiffening section 52.

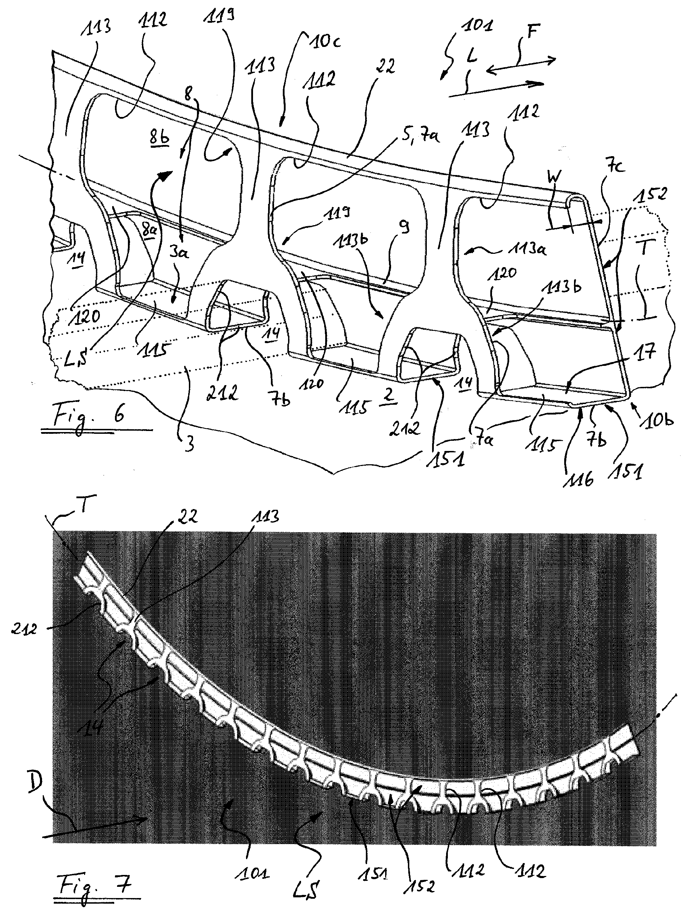

In Figures 6-9, a second embodiment of a structural component according to the present invention is illustrated. The structural component of the second embodiment is denoted by reference sign 101, but elements, sections, portions and the like corresponding in function to those of the first embodiment will be denoted by the same reference signs as in Figures 1-5. In the following, the differences of the second embodiment with respect to the first embodiment will be mainly described. The structural component 101 of the second embodiment is produced starting from a hollow initial profile 4 which has substantially the same shape as the initial profile 4 sketched in Figure 5.

The structural component 101 differs, however, in particular in the way openings are introduced into the first, second and third sections 7a-c of the wall 5 of the initial profile 4.

The structural component 101 is different from the structural component 1 of the first embodiment in that first openings 112, spaced from each other along the trajectory T of the structural component 101, are provided which only extend within the first section 7a of the wall 5 of the initial profile 4 and within the additional transverse wall 9. This is shown in Figure 6. The first openings 112 are provided by removing material in first regions 111 of the initial profile 4, but the first openings 112 do not extend into the second section 7b or into the third section 7c.

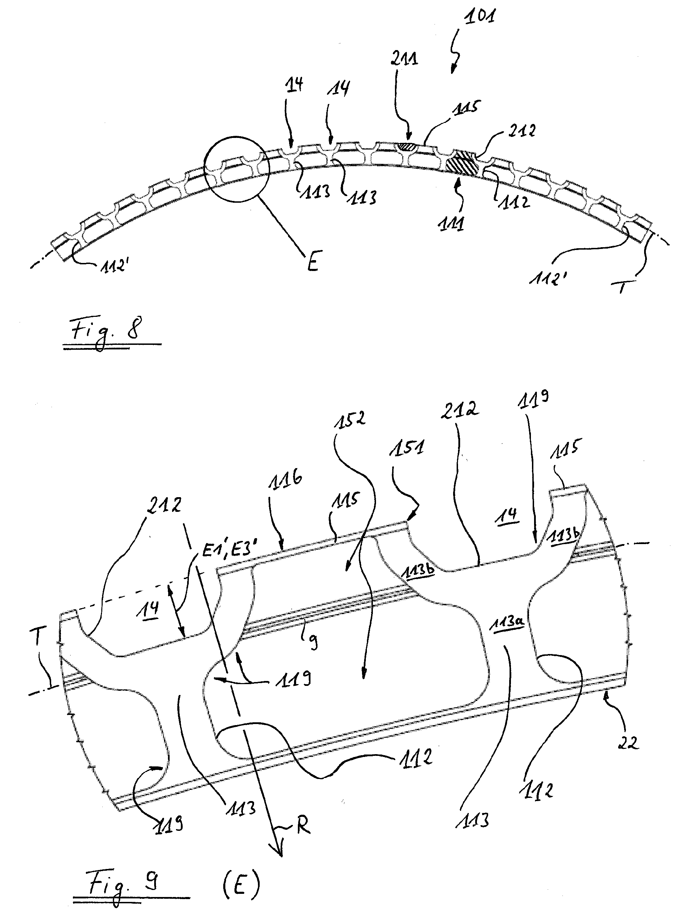

In addition to the first openings 112, the structural component 101 comprises a plurality of second openings 212, which are obtained by removing material initially forming the wall 5 in second regions 211 of the initial profile 4. One first and one second region 111, 211 are indicated in exemplary manner in Figure 8 by hatching. The removal of material in the regions 111, 211 is performed in the same manner as described before for the first openings 12 of the first embodiment.

Each of the second openings 212 partially extends within the first section 7a and extends from the first section 7a through the second section 7b into the third section 7c. The greatest extent of each second opening 212 into the first section 7a is denoted by E1', while the greatest extent of each second opening 212 into the third section 7c is denoted by E3' (see Figure 9). The extents E1', E3' may be substantially equal, as shown in Figures 6 to 9.

The second openings 212 form transverse passages 14 for additional stiffening components 3 such as stringers, when the structural component 1 is placed onto a fuselage skin 2, as has already been described with respect to the first embodiment. By the second opening 212, the second section 7b is divided, similar to the first embodiment, into a plurality of portions 115, adapted for being placed against the skin 2 or against stringer feet (not shown) for attaching the structural component 101 to the skin 2. For this purpose, the portions 115 are provided with abutment surfaces 116. The portions 115 thus form interface portions 151 of the structural component 101. Just as the first openings 112, the second openings 212 are spaced from each other along the trajectory T of the structural component 101. As is to be seen from Figures 6 to 9 as well, the first and second openings 112, 212 are arranged in alternating manner along the trajectory T (the direction of the length of the structural component 101).

Referring to Figures 6 and 9, in particular, it is seen that the first and second openings 112, 212 are formed in such a manner that material which initially forms part of the first section 7a of the wall 5, and remains after the formation of the first and second openings 112, 212, forms a stabilizing section 113. The stabilizing sections 113 are each formed with a Y-shape, which means that each of the stabilizing sections 113 comprises a stem 113a as well as two legs 113b, which are integrally connected to the stem 113a. While the stem 113a is integrally joined to the third section 7c in the region of the rounded edge 10c, see Figure 6, each of the legs 113b merges into an associated one of the portions 115 of the second section 7b. Specifically, in the second embodiment, two legs 113b, one of each of two adjacent stabilizing sections 113, merge into the same portion 115. Also, in the structural component 101 of the second embodiment of this invention, the stabilizing section 113 is connected by a remainder 120 of the additional transverse wall 9 of the initial profile 4 to the third section 7c. In this way, the stabilizing section 113 itself is stabilized and buckling thereof is prevented.

As is seen from Figure 6, for example, as the transverse passages 14 is located underneath the stem 113a of an associated stabilizing section 113, and as the stabilizing sections 113 are preferably formed symmetrically with respect to the passage 14, forces introduced into the stabilizing sections 113 can advantageously be introduced in symmetrical manner into the portions 115 on both sides of each of the stringers.

In similar manner as described for the first embodiment, the continuous portion of the third section 7c of the wall 5 that remains after the formation of the openings 112 and 212 forms a stiffening section 152, providing stiffness to a fuselage structure comprising a fuselage skin 2. By the stabilizing sections 113, the stiffening section 152 is braced against the interface portions 151.

In an advantageous variant, the second openings 212 may be shaped and dimensioned in such a manner that in addition to bracing the stiffening section 152 against the interface portions 151, forces can also be directly introduced from the stabilizing section 113 into the stringer or additional stiffening component 3 running beneath, for example by direct partial contact of the boundary of the second opening 212 with a top 3a of an Ω-stringer.

As has already been explained for the first embodiment, also in the structural component 101 of the second embodiment, the openings 112, 212 are provided with rounded regions 119 in order to reduce internal stresses when the structural component 101 is in a loaded condition.

Referring to Figure 10, an example of a method for producing a hollow initial profile 400, which may correspond to the initial profile 4 used for producing the structural component 1 or 101 and be provided with the cross-section shown in Figure 5, will now be briefly explained.

According to this method, layers of reinforcing fibers, for example layers of unidirectionally laid fibers, layers of non-crimp fabric of fibers and/or layers of woven fiber fabric, are placed layer by layer onto each of two cores 301, 302, which are represented in Figure 10 only schematically and will, of course, be chosen and shaped in such a manner that the shape of the desired initial profile 400, for example the initial profile 4 of Figure 5, is finally produced. A different number of cores may be chosen as well. In Figure 10, the individual layers of pre-impregnated fibers are labeled by reference numerals 304. As displayed in Figure 10, the layers 304 may wrap completely around each core 301, 302 in the circumferential direction thereof.

The layers 304 may be fiber prepregs, which means that the reinforcing fibers are pre-impregnated with a non-cured or partially cured matrix material, such prepregs being suitable for the production of high-quality composite components. The prepregs may comprise, in a preferred example, carbon fibers which after curing of the matrix material are embedded in an epoxy resin matrix.

After the layers 304 have been arranged on the cores 301, 302, the cores 301, 302 with the layers 304 thereon are arranged one above the other, and further fiber prepreg layers 305 are wrapped around this arrangement or assembly. The arrangement of the cores 301, 302 with layers 304, 305 may then be placed into a mold 303. Alternatively, the layers 305 may first be placed onto the mold 303, and then, the cores 301, 302 with the layers 304 can be arranged on the layers 305, already placed onto the mold 303.

Subsequently, after consolidation of the arrangement, the matrix material is cured, for example by placing the mold 303 and the cores 301, 302 with the layers 304, 305 in an autoclave and applying pressure and/or heat, in order to form a composite workpiece made from a fiber-reinforced synthetic material, in particular, from carbon fiber-reinforced epoxy resin. After the removal of the mold 303 and the removable cores 301, 302, a hollow initial profile 400 of the general shape indicated in Figure 10, comprising a wall 405 and two cells 408a, 408b separated by an additional transverse wall 409 integrally connected to the wall 405, is obtained. This initial profile 400 can then be further processed to obtain the structural component 1 or 101, as described before.

When arranging the fiber layers on the cores 301, 302, it is preferable to ensure that at least a part of the fibers are arranged in such a manner that, when the first and second openings 12, 112, 212 according to the first or second embodiment have been formed, some of the fibers or fibre bundles, indicated in exemplary manner by reference sign CF in Figure 4, still extend continuously from the third section 7c through the stabilizing section 13 or 113 into the respective portion 15 or 115 of the second section 7b. Further, it may be preferable to select the shapes of the openings 12, 112, 212 in a manner which ensures that such fibres CF remain in the stabilizing section 13, 113. Although the invention has been completely described above with reference to preferred embodiments, the invention is not limited to these embodiments.

As an example, the structural component 1 may not necessarily be curved in one direction only, but its trajectory could assume a shape curved in threedimensional space.

Further, the invention is not limited to providing two types of openings only. A greater number of differently shaped openings could be formed according to the needs of the structure into which the structural component is intended to be integrated.

Moreover, in a further exemplary modification, an initial profile comprising more than one additional transverse wall connecting the first and third section, for example two or three additional transverse walls, could be provided.

### List of reference signs

- 1: structural component
- 2: fuselage skin
- 3: additional stiffening component
- 3a: top (additional stiffening component)
- 4: initial profile
- 5: wall (initial profile)
- 6: closed path
- 7a: first section (wall)
- 7b: second section (wall)
- 7c: third section (wall)
- 7d: first sub-section (third section)
- 7e: second sub-section (third section)
- 8: interior
- 8a: cell
- 8b: cell
- 9: additional transverse wall (initial profile)
- 10a-c: rounded edge
- 11: first region
- 12: first opening
- 12': modified first opening
- 13: stabilizing section
- 14: transverse passage
- 15: portion (second section)
- 16: abutment surface
- 17: inner face (portion of second section)
- 18: end (structural component)
- 19: rounded region
- 20: remainder (additional transverse wall)
- 21: outer surface (wall)
- 22: inner flange (structural component)
- 51: interface portion (structural component)
- 52: stiffening section (structural component)

- 101: structural component
- 111: first region
- 112: first opening
- 112': modified first opening
- 113: stabilizing section
- 113a: stem (stabilizing section)
- 113b: leg (stabilizing section)
- 115: portion (second section)
- 116: abutment surface
- 119: rounded region
- 120: remainder (additional transverse wall)
- 151: interface portion (structural component)
- 152: stiffening section (structural component)
- 211: second region
- 212: second opening
- 301: core
- 302: core
- 303: mold
- 304: layer
- 305: layer
- 400: initial profile
- 405: wall (initial profile)
- 408a: cell (initial profile)
- 408b: cell (initial profile)
- 409: additional transverse wall

- CF: fibres
- E1: extent within first section (first opening, first embodiment)
- E3: extent within third section (first opening, first embodiment)
- E1': extent within first section (second opening, second embodiment)
- E2': extent within second section (second opening, second embodiment)
- F: force
- L: longitudinal direction (fuselage)
- LS: longitudinal side (structural component)
- R: direction perpendicular to the trajectory
- T: trajectory (structural component)
- W: width (inner flange)

- α: angle
- β: angle

## Claims

1. Method for the production of a structural component (1; 101), in particular a structural component (1; 101) adapted for use as a stiffening component in an aircraft or spacecraft structure, comprising the method steps of:
- forming a hollow initial profile (4) comprising a wall (5) which follows a closed path (6) in a cross-section of the initial profile (4), the wall (5) being formed with a first (7a), a second (7b) and a third (7c) section provided along the closed path (6) in such a manner that, in the direction of the closed path (6), the second section (7b) is provided between the first (7a) and third (7c) sections; and
- removing material initially forming part of the wall (5) in at least one first region (11; 111) of the initial profile (4) so as to obtain at least one first opening (12; 112) in the at least one first region (11; 111), the at least one first opening (12; 112) extending at least partially within the first section (7a),
the formation of the at least one first opening (12; 112) being performed in such a manner that material initially forming part of the wall (5) in the first section (7a) of the initial profile (4) and remaining after the formation of the at least one first opening (12; 112) forms at least one stabilizing section (13; 113), the at least one stabilizing section (13; 113) connecting the third section (7c) and the second section (7b) or the third section (7c) and at least one portion (15; 115) of the second section (7b) associated with the at least one stabilizing section (13; 113) , **characterized in that** the initial profile (4) is formed as a hollow profile comprising at least two cells (8a, 8b) adjacent to each other in the cross-section of the initial profile (4), the cells (8a, 8b) being formed by providing an additional transverse wall (9) which connects the first section (7a) and the third section (7c),
wherein material initially forming part of the transverse wall (9) is removed when the at least one first opening (12; 112) is formed, whereby the at least one first opening (12; 112) is formed so as to partially extend into the additional transverse wall (9) of the initial profile (4).

2. Method according to claim 1, **characterized in that** material initially forming part of the wall (5) in at least one second region (211) of the initial profile (4) is removed so as to obtain at least one second opening (212) in the at least one second region (211), the at least one second opening (212) partially extending within the first section (7a) and extending from the first section (7a) through the second section (7b) into the third section (7c) in such a manner that the at least one second opening (212) forms at least one transverse passage (14) through the structural component (101).

3. Method according to at least one of the preceding claims, **characterized in that** the initial profile (4) is produced from a fibre-reinforced synthetic material comprising fibres embedded in a matrix, wherein the removal of material initially forming part of the wall (5) preferably is performed in such a manner that within at least a portion of the at least one stabilizing section (13; 113) fibres (CF) are arranged which extend continuously from the third section (7c) through the stabilizing section (13; 113) into the second section (7b) or into the at least one portion (15; 115) of the second section (7b) associated with the stabilizing section (13; 113).

4. Method according to at least one of the preceding claims, **characterized in that** the at least one first opening (12; 112) and/or the at least one second opening (212) is/are formed as an aperture or apertures enabling access to an interior (8) of the initial profile (4) from an outside thereof or to a portion of the interior (8), the aperture(s) being formed by machining of the wall (5), in particular by milling, or by cutting the wall (5), in particular by means of a laser beam or a water jet, wherein preferably the at least one first opening (12; 112) is formed so as to enable access to an inner face (17) of the second section (7b) of the wall (5) or of the portions (15; 115) of the second section (7b).

5. Structural component (1; 101), in particular for use as a stiffening component in an aircraft or spacecraft structure, the structural component (1; 101) preferably being obtainable by performing the method according to any of claims 1 to 4,
the structural component (1; 101) being formed with a shape that can be obtained from a hollow initial profile (4) comprising a wall (5) which follows a closed path (6) in a cross-section of the initial profile (4), the wall (5) being formed with a first (7a), a second (7b) and a third (7c) section provided along the closed path (6) in such a manner that, in the direction of the closed path (6), the second section (7b) is provided between the first (7a) and third (7c) sections, at least one first opening (12; 112) being provided in at least one first region (11; 111) of the initial profile (4), the at least one first opening (12; 112) extending at least partially within the first section (7a),
wherein the at least one first opening (12; 112) is formed in such a manner that material forming part of the wall (5) in the first section (7a) of the initial profile (4) and outside of the at least one first opening (12; 112) forms at least one stabilizing section (13; 113) which connects the third section (7c) and the second section (7b) or the third section (7c) and at least one portion (15; 115) of the second section (7b) associated with the at least one stabilizing section (13; 113), **characterized in that** the initial profile (4) is formed as a hollow profile comprising at least two cells (8a, 8b) adjacent to each other in the cross-section of the initial profile (4), the cells (8a, 8b) being formed by an additional transverse wall (9) connecting the first section (7a) and the third section (7c),
wherein the at least one first opening (12; 112) partially extends into the additional transverse wall (9) of the initial profile (4).

6. Structural component according to claim 5, **characterized in that** the structural component (101) comprises at least one second opening (212) being provided in at least one second region (211) of the initial profile (4), the at least one second opening (212) partially extending within the first section (7a) and extending from the first section (7a) through the second section (7b) into the third section (7c), the at least one second opening (212) forming at least one transverse passage (14) through the structural component (101).

7. Structural component according to claim 6, **characterized in that** the at least one stabilizing section (113) is formed with a Y-shape comprising a stem (113a) and two legs (113b) connected to the stem (113a), the transverse passage (14) being arranged between the legs (113b).

8. Structural component according to at least one of claims 5 to 7, **characterized in that** the at least one first opening (12) is formed so as to extend from the first section (7a) through the second section (7b) into the third section (7c), whereby the first opening (12) forms a transverse passage (14) through the structural component (1),
and in particular **in that** the extent (E1, E3) of the first opening (12), measured in a direction (R) transverse to the direction (T) of the length of the initial profile (4), is greater in the first section (7a) than in the third section (7c).

9. Structural component according to at least one of claims 5 to 8, **characterized in that** the closed path (6) has substantially the shape of a polygon, in particular of a triangle or of a trapezoid, the first (7a), second (7b) and third (7c) sections of the wall (5) forming consecutive sides of the polygon in the cross-section of the initial profile (4).

10. Structural component according to at least one of claims 5 to 9, **characterized in that** the structural component (1; 101) is produced from a fibre-reinforced synthetic material comprising fibres embedded in a matrix, and preferably **in that** within at least a portion of the at least one stabilizing section (13; 113) fibres (CF) are arranged which extend continuously from the third section (7c) through the stabilizing section (13; 113) into the second section (7b) or into the at least one portion (15; 115) of the second section (7b) associated with the stabilizing section (13; 113).

11. Structural component according to at least one of claims 5 to 10, **characterized in that** the structural component (1; 101) is formed as a frame or a frame segment for an aircraft or spacecraft structure, in particular for a fuselage structure of an aircraft or spacecraft.

12. Shell adapted for being used as part of a fuselage structure, in particular as part of a fuselage structure of an aircraft or spacecraft, the shell comprising a skin element (2), a plurality of stringers (3) arranged on the skin element (2) and connected to the skin element (2), and a structural component (1; 101) according to at least one of claims 5 to 11, the structural component (1; 101) being arranged so as to extend substantially parallel to the skin element (2) and transversely to the stringers (3).

13. Aircraft or spacecraft, in particular airplane, comprising a structural component (1; 101) according to at least one of claims 5 to 11 and/or a shell according to claim 12.

## Patentansprüche

1. Verfahren zur Herstellung einer Strukturkomponente (1; 101), insbesondere einer Strukturkomponente (1; 101), die zur Verwendung als eine Versteifungskomponente in einer Luftfahrzeug- oder Raumfahrzeugstruktur ausgelegt ist, das folgende Verfahrensschritte umfasst:
- Bilden eines hohlen Ausgangsprofils (4), das eine Wand (5) umfasst, die einem geschlossenen Pfad (6) in einem Querschnitt des Ausgangsprofils (4) folgt, wobei die Wand (5) mit einer ersten (7a), einer zweiten (7b) und einer dritten (7c) Sektion ausgebildet ist, die entlang des geschlossenen Pfades (6) in einer solchen Weise bereitgestellt sind, dass, in der Richtung des geschlossenen Pfades (6), die zweite Sektion (7b) zwischen der ersten (7a) und der dritten (7c) Sektion angeordnet ist; und
- Entfernen von Material, das zunächst einen Teil der Wand (5) in mindestens einer ersten Region (11; 111) des Ausgangsprofils (4) bildete, um mindestens eine erste Öffnung (12; 112) in der mindestens einen ersten Region (11; 111) zu erhalten, wobei sich die mindestens eine erste Öffnung (12; 112) mindestens teilweise innerhalb der ersten Sektion (7a) erstreckt,
wobei das Ausbilden der mindestens einen ersten Öffnung (12; 112) in einer solchen Weise ausgeführt wird, dass Material, das zunächst einen Teil der Wand (5) in der ersten Sektion (7a) des Ausgangsprofils (4) bildete und nach dem Ausbilden der mindestens einen ersten Öffnung (12; 112) übrig blieb, mindestens eine Stabilisierungssektion (13; 113) bildet, wobei die mindestens eine Stabilisierungssektion (13; 113) die dritte Sektion (7c) und die zweite Sektion (7b) oder die dritte Sektion (7c) und mindestens einen Abschnitt (15; 115) der zweiten Sektion (7b), welcher der mindestens einen Stabilisierungssektion (13; 113) zugeordnet ist, verbindet,
**dadurch gekennzeichnet, dass** das Ausgangsprofil (4) als ein Hohlprofil ausgebildet wird, das mindestens zwei Zellen (8a, 8b) umfasst, die im Querschnitt des Ausgangsprofils (4) nebeneinander liegen, wobei die Zellen (8a, 8b) durch Bereitstellen einer zusätzlichen Querwand (9) gebildet werden, welche die erste Sektion (7a) und die dritte Sektion (7c) verbindet,
wobei Material, das zunächst einen Teil der Querwand (9) bildete, entfernt wird, wenn die mindestens eine erste Öffnung (12; 112) gebildet wird, wodurch die mindestens eine erste Öffnung (12; 112) so gebildet wird, dass sie sich teilweise in die zusätzliche Querwand (9) des Ausgangsprofils (4) erstreckt.

2. Verfahren nach Anspruch 1, **dadurch gekennzeichnet, dass** Material, das zunächst einen Teil der Wand (5) in mindestens einer zweiten Region (211) des Ausgangsprofils (4) bildete, entfernt wird, um mindestens eine zweite Öffnung (212) in der mindestens einen zweiten Region (211) zu erhalten, wobei sich die mindestens eine zweite Öffnung (212) teilweise innerhalb der ersten Sektion (7a) erstreckt und sich von der ersten Sektion (7a) durch die zweite Sektion (7b) in die dritte Sektion (7c) in einer solchen Weise hinein erstreckt, dass die mindestens eine zweite Öffnung (212) mindestens eine Querpassage (14) durch die Strukturkomponente (101) bildet.

3. Verfahren nach mindestens einem der vorangehenden Ansprüche, **dadurch gekennzeichnet, dass** das Ausgangsprofil (4) aus einem faserverstärkten synthetischen Material hergestellt wird, das Fasern enthält, die in eine Matrix eingebettet sind, wobei das Entfernen von Material, das zunächst einen Teil der Wand (5) bildete, bevorzugt in einer solchen Weise ausgeführt wird, dass innerhalb mindestens eines Abschnitts der mindestens einen Stabilisierungssektion (13; 113) Fasern (CF) angeordnet sind, die sich kontinuierlich von der dritten Sektion (7c) durch die Stabilisierungssektion (13; 113) in die zweite Sektion (7b) oder in den mindestens einen Abschnitt (15; 115) der zweiten Sektion (7b), welcher der Stabilisierungssektion (13; 113) zugeordnet ist, erstrecken.

4. Verfahren nach mindestens einem der vorangehenden Ansprüche, **dadurch gekennzeichnet, dass** die mindestens eine erste Öffnung (12; 112) und/oder die mindestens eine zweite Öffnung (212) als eine Öffnung oder Öffnungen ausgebildet sind, die den Zugang zu einem Inneren (8) des Ausgangsprofils (4) von einer Außenseite davon oder zu einem Abschnitt des Inneren (8) ermöglichen, wobei die Öffnung oder die Öffnungen durch maschinelle Bearbeitung der Wand (5), insbesondere durch Fräsen, oder durch Schneiden der Wand (5), insbesondere mittels eines Laserstrahls oder eines Wasserstrahls, ausgebildet werden, wobei bevorzugt die mindestens eine erste Öffnung (12; 112) so gebildet wird, dass der Zugang zu einer Innenfläche (17) der zweiten Sektion (7b) der Wand (5) oder der Abschnitte (15; 115) der zweiten Sektion (7b) ermöglicht wird.

5. Strukturkomponente (1; 101), insbesondere zur Verwendung als eine Versteifungskomponente in einer Luftfahrzeug- oder Raumfahrzeugstruktur, wobei die Strukturkomponente (1; 101) bevorzugt durch Ausführen des Verfahrens nach einem der Ansprüche 1 bis 4 erhalten werden kann,
wobei die Strukturkomponente (1; 101) mit einer Form ausgebildet wird, die aus einem hohlen Ausgangsprofil (4) erhalten werden kann, das eine Wand (5) umfasst, die einem geschlossenen Pfad (6) in einem Querschnitt des Ausgangsprofils (4) folgt, wobei die Wand (5) mit einer ersten (7a), einer zweiten (7b) und einer dritten (7c) Sektion ausgebildet ist, die entlang des geschlossenen Pfades (6) in einer solchen Weise bereitgestellt sind, dass, in der Richtung des geschlossenen Pfades (6), die zweite Sektion (7b) zwischen der ersten (7a) und der dritten (7c) Sektion angeordnet ist; wobei mindestens eine erste Öffnung (12; 112) in mindestens einer ersten Region (11; 111) des Ausgangsprofils (4) bereitgestellt ist, wobei sich die mindestens eine erste Öffnung (12; 112) mindestens teilweise innerhalb der ersten Sektion (7a) erstreckt,
wobei die mindestens eine erste Öffnung (12; 112) in einer solchen Weise gebildet wird, dass Material, das einen Teil der Wand (5) in der ersten Sektion (7a) des Ausgangsprofils (4) bildet und außerhalb der mindestens einen ersten Öffnung (12; 112) liegt, mindestens eine Stabilisierungssektion (13; 113) bildet, welche die dritte Sektion (7c) und die zweite Sektion (7b) oder die dritte Sektion (7c) und mindestens einen Abschnitt (15; 115) der zweiten Sektion (7b), welcher der mindestens einen Stabilisierungssektion (13; 113) zugeordnet ist, verbindet,
**dadurch gekennzeichnet, dass** das Ausgangsprofil (4) als ein Hohlprofil ausgebildet ist, das mindestens zwei Zellen (8a, 8b) umfasst, die im Querschnitt des Ausgangsprofils (4) nebeneinander liegen, wobei die Zellen (8a, 8b) durch Bereitstellen einer zusätzlichen Querwand (9) gebildet werden, welche die erste Sektion (7a) und die dritte Sektion (7c) verbindet,
wobei sich die mindestens eine erste Öffnung (12; 112) teilweise in die zusätzliche Querwand (9) des Ausgangsprofils (4) erstreckt.

6. Strukturkomponente nach Anspruch 5, **dadurch gekennzeichnet, dass** die Strukturkomponente (101) mindestens eine zweite Öffnung (212) umfasst, die in mindestens einer zweiten Region (211) des Ausgangsprofils (4) bereitgestellt ist, wobei sich die mindestens eine zweite Öffnung (212) teilweise innerhalb der ersten Sektion (7a) erstreckt und sich von der ersten Sektion (7a) durch die zweite Sektion (7b) in die dritte Sektion (7c) hinein erstreckt, wobei die mindestens eine zweite Öffnung (212) mindestens eine Querpassage (14) durch die Strukturkomponente (101) bildet.

7. Strukturkomponente nach Anspruch 6, **dadurch gekennzeichnet, dass** die mindestens eine Stabilisierungssektion (113) in einer Y-Form gebildet ist, die einen Stamm (113a) und zwei Schenkel (113b), die mit dem Stamm (113a) verbunden sind, umfasst, wobei die Querpassage (14) zwischen den Schenkels (113b) angeordnet ist.

8. Strukturkomponente nach mindestens einem der Ansprüche 5 bis 7, **dadurch gekennzeichnet, dass** die mindestens eine erste Öffnung (12) so gebildet ist, dass sie sich von der ersten Sektion (7a) durch die zweite Sektion (7b) in die dritte Sektion (7c) erstreckt, wobei die erste Öffnung (12) eine Querpassage (14) durch die Strukturkomponente (1) bildet, und
insbesondere dadurch, dass die Erstreckung (E1, E3) der ersten Öffnung (12), in einer Richtung (R) quer zu der Richtung (T) der Länge des Ausgangsprofils (4) gemessen, in der ersten Sektion (7a) größer ist als in der dritten Sektion (7c).

9. Strukturkomponente nach mindestens einem der Ansprüche 5 bis 8, **dadurch gekennzeichnet, dass** der geschlossene Pfad (6) im Wesentlichen die Form eines Polygons, insbesondere eines Dreiecks oder eines Trapezoids, hat, wobei die erste (7a), die zweite (7b) und die dritte (7c) Sektion der Wand (5) aufeinanderfolgende Seiten des Polygons im Querschnitt des Ausgangsprofils (4) bilden.

10. Strukturkomponente nach mindestens einem der Ansprüche 5 bis 9, **dadurch gekennzeichnet, dass** die Strukturkomponente (1; 101) aus einem faserverstärkten synthetischen Material hergestellt ist, das Fasern enthält, die in eine Matrix eingebettet sind, und bevorzugt dadurch, dass innerhalb mindestens eines Abschnitts der mindestens einen Stabilisierungssektion (13; 113) Fasern (CF) angeordnet sind, die sich kontinuierlich von der dritten Sektion (7c) durch die Stabilisierungssektion (13; 113) in die zweite Sektion (7b) oder in den mindestens einen Abschnitt (15; 115) der zweiten Sektion (7b), welcher der Stabilisierungssektion (13; 113) zugeordnet ist, erstrecken.

11. Strukturkomponente nach mindestens einem der Ansprüche 5 bis 10, **dadurch gekennzeichnet, dass** die Strukturkomponente (1; 101) als ein Rahmen oder ein Rahmensegment für eine Luftfahrzeug- oder Raumfahrzeugstruktur gebildet ist, insbesondere für eine Rumpfstruktur eines Luftfahrzeugs oder Raumfahrzeugs.

12. Hülle, die dafür ausgelegt ist, als Teil einer Rumpfstruktur, insbesondere als Teil einer Rumpfstruktur eines Luftfahrzeugs oder Raumfahrzeugs, verwendet zu werden, wobei die Hülle Folgendes umfasst: ein Außenhautelement (2), mehrere Längsversteifungen (3), die auf dem Außenhautelement (2) angeordnet und mit dem Außenhautelement (2) verbunden sind, und eine Strukturkomponente (1; 101) nach mindestens einem der Ansprüche 5 bis 11, wobei die Strukturkomponente (1; 101) so angeordnet ist, dass sie sich im Wesentlichen parallel zu dem Außenhautelement (2) und quer zu den Längsversteifungen (3) erstreckt.

13. Luftfahrzeug oder Raumfahrzeug, insbesondere ein Flugzeug, das eine Strukturkomponente (1; 101) nach mindestens einem der Ansprüche 5 bis 11 und/oder eine Hülle nach Anspruch 12 umfasst.

## Revendications

1. Procédé de fabrication d'un composant structural (1 ; 101), en particulier, d'un composant structural (1 ; 101) conçu pour être utilisé en tant que composant de raidissement dans une structure d'aéronef ou d'engin spatial, comprenant les étapes consistant à :
- former un profil initial creux (4) comprenant une paroi (5) qui suit un trajet fermé (6) dans une section transversale du profil initial (4), la paroi (5) étant constituée de première (7a), deuxième (7b) et troisième (7c) sections disposées le long du trajet fermé (6), de manière que dans la direction du trajet fermé (6), la deuxième section (7b) soit disposée entre les première (7a) et troisième (7c) sections ; et
- enlever du matériau faisant initialement partie de la paroi (5) dans au moins une première région (11 ; 111) du profil initial (4), de manière à obtenir au moins une première ouverture (12 ; 112) dans ladite au moins une première région (11 ; 111), ladite au moins une première ouverture (12 ; 112) s'étendant au moins en partie à l'intérieur de la première section (7a), la formation de ladite au moins une première ouverture (12 ; 112) étant réalisée de manière que du matériau faisant initialement partie de la paroi (5) dans la première section (7a) du profil initial (4) et subsistant après la formation de ladite au moins une première ouverture (12 ; 112) forme au moins une section de stabilisation (13 ; 113), ladite au moins une section de stabilisation (13 ; 113) reliant la troisième section (7c) et la deuxième section (7b) ou la troisième section (7c) et au moins une partie (15 ; 115) de la deuxième section (7b) associée à ladite au moins une section de stabilisation (13 ; 113),
**caractérisé en ce que** :
le profil initial (4) est formé comme un profil creux comprenant au moins deux cellules (8a, 8b) voisines l'une de l'autre dans la section transversale du profil initial (4), les cellules (8a, 8b) étant formées par création d'une paroi transversale supplémentaire (9) qui relie la première section (7a) et la troisième section (7c),
dans lequel du matériau faisant initialement partie de la paroi transversale (9) est enlevé lorsque ladite au moins une première ouverture (12 ; 112) est formée, de sorte que ladite au moins une première ouverture (12 ; 112) soit formée de manière à s'étendre en partie dans la paroi transversale supplémentaire (9) du profil initial (4).

2. Procédé selon la revendication 1, **caractérisé en ce que** du matériau faisant initialement partie de la paroi (5) dans au moins une seconde région (211) du profil initial (4) est enlevé, de manière à obtenir au moins une seconde ouverture (212) dans ladite au moins une seconde région (211), ladite au moins une seconde région (212) s'étendant en partie à l'intérieur de la première section (7a) et s'étendant de la première section (7a), en passant par la deuxième section (7b), jusqu'à la troisième section (7c), de manière que ladite au moins une seconde ouverture (212) forme au moins un passage transversal (14) à travers le composant structural (101).

3. Procédé selon l'une au moins des revendications précédentes, **caractérisé en ce que** le profil initial (4) est fabriqué à partir d'un matériau synthétique renforcé par des fibres, comprenant des fibres noyées dans une matrice, dans lequel l'enlèvement de matériau faisant initialement partie de la paroi (5) est effectué de préférence de manière qu'à l'intérieur d'au moins une partie de ladite au moins une section de stabilisation (13 ; 113), soient disposées des fibres (CF) qui s'étendent en continu de la troisième section (7c), en passant par la section de stabilisation (13 ; 113), jusqu'à la deuxième section (7b) ou jusqu'à ladite au moins une partie (15 ; 115) de la deuxième section (7b) associée à la section de stabilisation (13 ; 113).

4. Procédé selon l'une quelconque des revendications précédentes, **caractérisé en ce que** ladite au moins une première ouverture (12 ; 112) et/ou ladite au moins une seconde ouverture (212) est/sont formée(s) comme une ouverture ou des ouvertures donnant accès à l'intérieur (8) du profil initial (4), depuis l'extérieur de celui-ci ou à une partie de l'intérieur (8), l'ouverture ou les ouvertures étant formée(s) par usinage de la paroi (5), en particulier, par fraisage ou par découpage de la paroi (5), en particulier au moyen d'un faisceau laser ou d'un jet d'eau, dans lequel, de préférence, ladite au moins une première ouverture (12 ; 112) est formée de manière à donner accès à une face intérieure (17) de la deuxième section (7b) de la paroi (5) ou des parties (15 ; 115) de la deuxième section (7b).

5. Composant structural (1 ; 101), en particulier destiné à être utilisé en tant que composant de raidissement, dans une structure d'aéronef ou d'engin spatial, le composant structural (1 ; 101) pouvant être obtenu, de préférence, par mise en oeuvre du procédé selon l'une quelconque des revendications 1 à 4,
le composant structural (1 ; 101) étant formé selon une forme pouvant être obtenue à partir d'un profil initial creux (4) comprenant une paroi (5) qui suit un trajet fermé (6) dans une section transversale du profil initial (4), la paroi (5) étant constituée de première (7a), deuxième (7b) et troisième (7c) sections disposées le long du trajet fermé (6), de manière que dans la direction du trajet fermé (6), la deuxième section (7b) soit disposée entre les première (7a) et troisième (7c) sections, au moins une première ouverture (12 ; 112) étant ménagée dans au moins une première région (11 ; 111) du profil initial (4), ladite au moins une première ouverture (12 ; 112) s'étendant au moins en partie à l'intérieur de la première section (7a),
dans lequel ladite au moins une première ouverture (12 ; 112) est formée de manière que du matériau faisant partie de la paroi (5) dans la première section (7a) du profil initial (4) et à l'extérieur de ladite au moins une première ouverture (12 ; 112) forme au moins une section de stabilisation (13 ; 113) qui relie la troisième section (7c) et la deuxième section (7b) ou la troisième section (7c) et au moins une partie (15 ; 115) de la deuxième section (7b) associée à ladite au moins une section de stabilisation (13 ; 113),
**caractérisé en ce que** :
le profil initial (4) est formé comme un profil creux comprenant au moins deux cellules (8a, 8b) voisines l'une de l'autre dans la section transversale du profil initial (4), les cellules (8a, 8b) étant formées par une paroi transversale supplémentaire (9) reliant la première section (7a) et la troisième section (7c),
dans lequel ladite au moins une première ouverture (12 ; 112) s'étend en partie dans la paroi transversale supplémentaire (9) du profil initial (4).

6. Composant structural selon la revendication 5, **caractérisé en ce que** le composant structural (101) comprend au moins une seconde ouverture (212) qui est ménagée dans au moins une seconde région (211) du profil initial (4), ladite au moins une seconde ouverture (212) s'étendant en partie à l'intérieur de la première section (7a) et s'étendant de la première section (7a), en passant par la deuxième section (7b), jusqu'à la troisième section (7c), ladite au moins une seconde ouverture (212) formant au moins un passage transversal (14) à travers le composant structural (101).

7. Composant structural selon la revendication 6, **caractérisé en ce que** ladite au moins une section de stabilisation (113) est formée selon une forme en Y comprenant une tige (113a) et deux jambes (113b) reliées à la tige (113a), le passage transversal (14) étant disposé entre les jambes (113b).

8. Composant structural selon l'une au moins des revendications 5 à 7, **caractérisé en ce que** ladite au moins une première ouverture (12) est formée de manière à s'étendre de la première section (7a), en passant par la deuxième section (7b), jusqu'à la troisième section (7c), de sorte que la première ouverture (12) forme un passage transversal (14) à travers le composant structural (1) et en particulier, **en ce que** l'étendue (E1, E3) de la première ouverture (12), mesurée dans une direction (R) transversale à la direction (T) de la longueur du profil initial (4) est plus grande dans la première section (7a) que dans la troisième section (7c).

9. Composant structural selon l'une au moins des revendications 5 à 8, **caractérisé en ce que** le trajet fermé (6) a sensiblement la forme d'un polygone, en particulier, d'un triangle ou d'un trapézoïde, les première (7a), deuxième (7b) et troisième (7c) sections de la paroi (5) formant des côtés consécutifs du polygone dans la section transversale du profil initial (4).

10. Composant structural selon l'une au moins des revendications 5 à 9, **caractérisé en ce que** le composant structural (1 ; 101) est fabriqué à partir d'un matériau synthétique renforcé par des fibres, comprenant des fibres noyées dans une matrice, et de préférence, **en ce qu'**à l'intérieur d'au moins une partie de ladite au moins une section de stabilisation (13 ; 113), sont disposées des fibres (CF) qui s'étendent en continu de la troisième section (7c), en passant par la section de stabilisation (13 ; 113), jusqu'à la deuxième section (7b) ou jusqu'à ladite au moins une partie (15 ; 115) de la deuxième section (7b) associée à la section de stabilisation (13 ; 113).

11. Composant structural selon l'une au moins des revendications 5 à 10, **caractérisé en ce que** le composant structural (1 ; 101) est formé comme un cadre ou un segment de cadre destiné à une structure d'aéronef ou d'engin spatial, en particulier à une structure de fuselage d'aéronef ou d'engin spatial.

12. Coque conçue pour être utilisée en tant partie de structure de fuselage, en particulier, en tant que partie de structure de fuselage d'un aéronef ou d'un engin spatial, la coque comprenant un élément de revêtement (2), une pluralité de lisses (3) disposées sur l'élément de revêtement (2) et reliées à l'élément de revêtement (2), et un composant structural (1 ; 101) selon l'une au moins des revendications 5 à 11, le composant structural (1 ; 101) étant disposé de manière à s'étendre de façon sensiblement parallèle à l'élément de revêtement (2) et transversalement aux lisses (3).

13. Aéronef ou engin spatial, en particulier, avion, comprenant un composant structural (1 ; 101) selon l'une au moins des revendications 5 à 11 et/ou une coque selon la revendication 12.
